# EUROPEAN PATENT SPECIFICATION

(11) **EP 3 097 031 B1**
(45) Date of publication and mention of the grant of the patent: **29.09.2021**
(21) Application number: 14701088.8
(22) Date of filing: 22.01.2014
(51) Int. Cl.: B65G 47/14

(54) **COMPONENT FEEDER WITH A LIFT**
KOMPONENTENZUFÜHRER MIT HEBEVORRICHTUNG
DISTRIBUTEUR D'ÉLÉMENTS COMPRENANT UN ÉLÉVATEUR

(43) Date of publication of application: 30.11.2016
(73) Proprietor: ABB Schweiz AG, 5400 Baden (CH)
(72) Inventor: SIRKETT, Daniel, S-722 10 Västerås (SE); VIILUP, Siim, S-724 64 Västerås (SE)
(74) Representative: Kransell & Wennborg KB
(86) International application number: PCT/EP2014/051201
(87) International publication number: WO 2015/110151

(56) References cited:
- WO-A1-2013/113367
- WO-A2-94/20395
- US-A- 6 039 209
- None

## Description

### TECHNICAL FIELD

The present invention relates to a device for dispensing components from a bulk storage by means of a reciprocating lift.

### BACKGROUND ART

Component feeders capable of dispensing various types of components many times utilize reciprocating lifts for separating a selection of components from a bulk storage. A lift platform is sunk into the bulk storage, and when it is raised again, a selection of components remains on the lift platform while an excess of components falls off. Such component feeders are known for example from WO2013113367A1, FR2922798B1 and EP2033913A2.

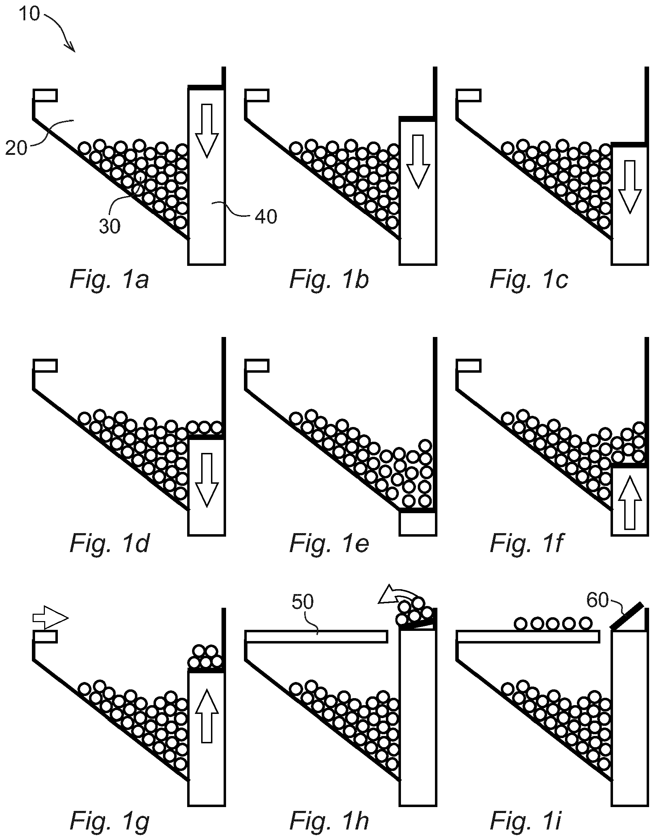

Referring to figure 1, a conventional component feeder 10 comprises a hopper 20 for storing a bulk storage of components 30 to be dispensed, and a lift 40 for separating a selection of components 30 from the hopper 20. The selection of components 30 is spread on a pick surface 50 to be picked e.g. by an industrial robot (not shown). At a starting position of a work cycle according to figure 1a the lift 40 is at its uppermost position and the pick surface 50 is in a retracted position. The lift 40 travels all the way to its lowermost position according to figures 1b-1e, after which it travels back to it uppermost position bringing along a selection of components 30. The pick surface 50 is then brought to an extracted position, and the selection of components 30 is spread from the lift 40 on the pick surface 50 by giving the components 30 a push with an inclining lift platform 60. The lift 40 then remains at its uppermost position until all the components 30 on the pick surface 50 are either picked or returned to the hopper 20 by retracting the pick surface 50, after which the lift 40 starts over its work cycle.

WO 94/20395 A2 discloses a component feeder according to the preamble of appended claim 1 and a method for dispensing components according to the preamble of appended claim 7.

Conventionally, the travel of the lift remains unchanged during consecutive work cycles. The lift simply travels all the way down and all the way up during each work cycle. Conventional component feeders are not able to shorten the work cycle by limiting the travel of the lift, and potentially other elements of the system (e.g. the pick surface) need to wait for a needlessly long time for the lift to finish its travel. Because the lifts typically come into contact with some components, and thereto cause a relative movement of a large number of components against each other, an excessive travel of the lifts causes wear and potential damage of the components.

There is a desire to mitigate the aforementioned drawbacks in a component feeder comprising a reciprocating lift.

### SUMMARY OF THE INVENTION

One object of the invention is to provide an improved component feeder with a shortened work cycle and a decreased wear of the components to be dispensed.

A further object of the invention is to provide an improved method of dispensing components, the method providing a shortened work cycle and a decreased wear of the components to be dispensed.

These objects are achieved by the device according to appended claim 1 and the method according to appended claim 7. The invention is defined by the independent claims.

The invention is based on the realization that a lift in a component feeder does not always need to travel all the way down to receive components, and by adjusting the travel from one work cycle to another after need the work cycle of the component feeder is shortened at the same time as an excessive wear of the components is decreased.

There is provided a component feeder for dispensing components during consecutive work cycles. The component feeder comprises a lift for elevating a selection of components from a bulk storage during each work cycle, and a controller for controlling a travel of the lift. The controller is configured to adjust the travel from one work cycle to another.

The component feeder further comprises a pick surface adjacent to the lift for receiving the selection of components, and the lift is configured to travel downwards while there are components on the pick surface.

The component feeder indicates a reception level where the lift travelled low enough to receive one or more components, and the controller is configured to adjust the travel in dependence of the reception level indication.

The component feeder may indicate a component level, and the controller may be configured to adjust the travel in dependence of the component level indication.

According to one embodiment of the invention, the component feeder further comprises a hopper with a hopper volume for receiving the bulk storage of components, the hopper volume being adjustable.

According to one embodiment of the invention, the hopper comprises an inclinable bottom.

According to one embodiment of the invention, the hopper comprises an opening for emptying the hopper by gravity.

According to one embodiment of the invention, the component feeder is configured to adjust the hopper volume from one work cycle to another.

Further, there is provided a method for dispensing components during consecutive work cycles. The method comprises the steps of: providing a lift for elevating a selection of components from a bulk storage during each work cycle; controlling a travel of the lift; and adjusting the travel from one work cycle to another.

### BRIEF DESCRIPTION OF THE DRAWINGS

The invention will be explained in greater detail with reference to the accompanying drawings, wherein
- figure 1: shows one embodiment of a conventional component feeder,
- figure 2: shows a component feeder according to one embodiment of the invention, and
- figure 3: shows a component feeder according to one embodiment of the invention.

### DESCRIPTION OF PREFERRED EMBODIMENTS

In the context of the present invention, a travel 90 of a lift 40 refers to a distance the lift 40 moves.

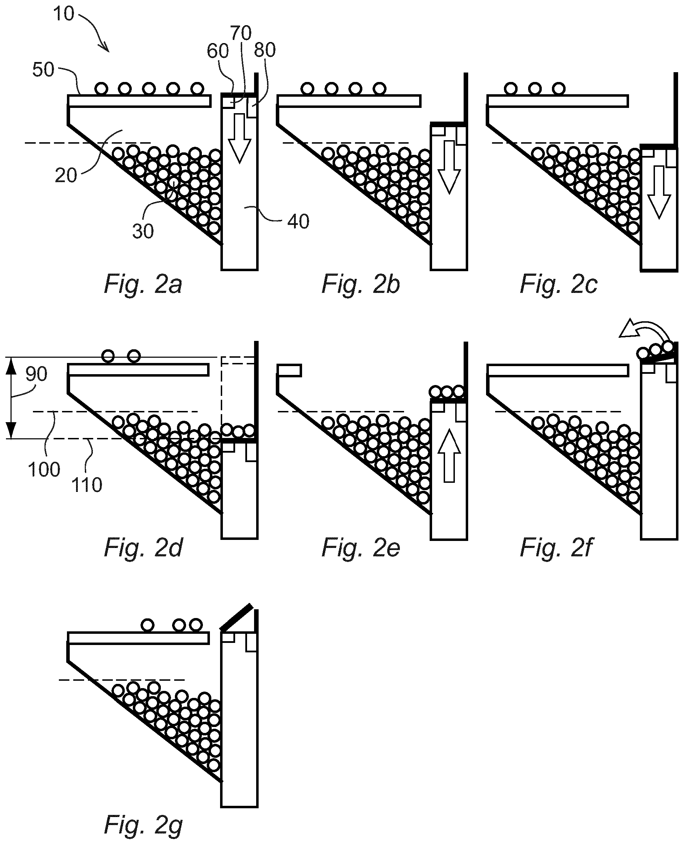

Referring to figure 2, a component feeder 10 according to one embodiment of the invention comprises a hopper 20 for storing a bulk storage of components 30 to be dispensed, and a lift 40 for separating a selection of components 30 from the hopper 20. The selection of components 30 is spread on a pick surface 50 to be picked e.g. by an industrial robot (not shown). At a starting position of the work cycle according to figure 2a the lift 40 is at its uppermost position. According to the embodiment of figure 2 the work cycle is considered to start right after a selection of components 30 is spread on the pick surface 50. The lift 40 therefore starts moving downward while there are components 30 on the pick surface 50, and the picking of components 30 is started during the downward movement of the lift 40 according to figures 2b and 2c. Thereby, in contrast to figure 1, the work cycle is shortened by a time corresponding to the downward movement of the lift 40 (according to figure 1 the lift 40 remains at its uppermost position until all the components 30 are either picked or returned to the hopper 20 by retracting the pick surface 50).

The lift 40 comprises an optical sensor 70 just below a lift platform 60, the optical sensor 70 pointing towards the hopper 20. The sensor is activated when the lift 40 starts moving down and sends a signal to a controller 80 controlling a travel 90 of the lift 40 as soon as a component level 100 is detected, the component level 100 corresponding to the level of the uppermost components 30 within the hopper 20. The controller 80 is configured to continue the downward movement of the lift 40 for a predetermined delay after receiving the signal in order to allow the lift 40 to receive components 30 on the lift platform 60. An appropriate duration of the delay depends on the size and form of the components 30, and on the velocity of the lift 40. After the delay, the lift 40 is stopped at a reception level 110 which corresponds to a position where the lift 40 travelled low enough to receive one or more components 30 according to figure 2d. It is to be noted that the reception level 110 can be any position of the lift 40 between its (almost) uppermost and lowermost positions depending on the amount of components 30 within the hopper 20.

The lift 40 remains at the reception level 110 until all the components 30 on the pick surface 50 are either picked or returned to the hopper 20 by retracting the pick surface 50, after which the lift 40 travels back to its uppermost position bringing along a selection of components 30. During the upward movement of the lift 40 the pick surface 50 is at least partially retracted to avoid any components 30 getting caught between it and the lift platform 60. When the lift 40 reaches its uppermost position, the pick surface 50 is fully extracted to receive the components 30 according to figure 2f. The selection of components 30 is spread from the lift 40 on the pick surface 50 by giving them a push with an inclining lift platform 60 according to figures 2f and 2g, and the lift 40 is ready to start over its work cycle. According to the embodiment of figure 2 the controller 80 adjusts the travel 90 of the lift 40 from one work cycle to another in dependence of a component level 100 indicated by the optical sensor 70. However, an appropriate reception level 110 may be determined by many other means and without necessarily knowing the component level 100. For example, the lift platform 60 may comprise a scale or another type of sensor (such as an optical sensor crossing the lift platform 60) being able to detect the presence of components 30 on it. A presence of components 30 on the lift platform 60 is an indication of an appropriate reception level 110 being reached, and the controller 80 can be configured to adjust the travel 90 in dependence of such reception level indication.

The travel adjustment can also be made without any component detecting sensors at all. For example, the lift 40 and the controller 80 may comprise means for providing information about an absolute position of the lift 40 at any instance during a work cycle, and the travel 90 of the lift 40 can be programmed to gradually increase from work cycle to work cycle as the hopper 20 gets emptier. In other words, the determination of an appropriate reception level 110 may be based on earlier experience or calculations on the amount of components 30 within the hopper 20 at certain instance. What is essential for the invention is that the controller 80 is configured to adjust the travel 90 of the lift 40 from one work cycle to another, although not necessarily between each pair of consecutive work cycles. This adjustment can be based on many different types of information relating to the amount of components 30 within the hopper 20.

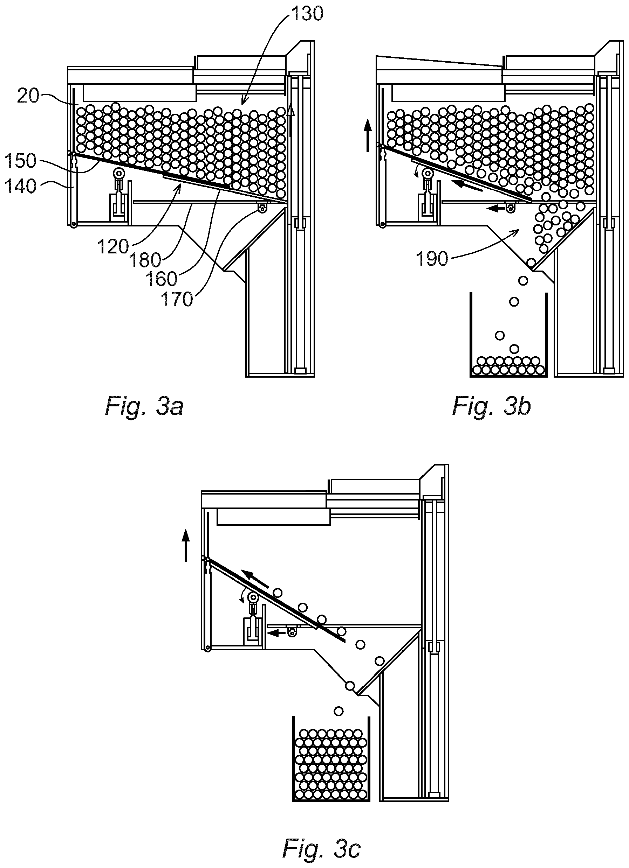

Referring to figure 3, according to another embodiment of the invention the hopper 20 comprises an inclinable bottom 120 that allows the hopper volume 130 to be adjusted. The initial hopper volume 130 can thereby be made large by bringing the bottom 120 to its lowermost position, and the hopper volume 130 can be decreased gradually by increasing the inclination as the amount of components 30 within the hopper 20 gets less. Consequently, the component level 100 and the corresponding reception level 110 can be maintained relatively constant and high until the amount of components 30 gets so small that the bottom 120 reaches its maximum inclination. The high reception level 110 further limits the required travel 90 of the lift 40, and as a result shortens the work cycle. A hopper 20 capable of adjusting its volume 130 is therefore especially advantageous in combination with a lift 40 capable of adjusting its travel 90. The volume occupied by the lift 40 is not to be considered to be part of the hopper volume 130, and consequently the embodiment according to figure 1 is not to be considered to disclose an adjustable hopper volume 130.

According to the embodiment of figure 3a the inclination of the bottom 120 is realized with a pneumatic cylinder 140 attached to one end of the bottom 120 consisting of a first bottom section 150 and a second bottom section 160. The opposite end of the bottom 120 is attached to a slide 170 allowing the inclination, and the first and second bottom sections 150, 160 are made movable in relation to each other such that the length of the bottom 120 can be varied. The cylinder 140 can be used not only to adjust the inclination of the bottom 120, but also to shake the bottom 120 by changing the actuation direction of the cylinder 140 in a fast manner. The shaking movement of the bottom 120 encourages the components 30 to slide down towards the lift 40.

Furthermore, according to figures 3b and 3c, the second bottom section 160 can be actuated on its own to act as a sliding door providing an opening 190 for emptying the hopper 20 by gravity. When opening and closing the opening 190, the slide 170 runs within a horizontal groove 180. The cylinder 140 can advantageously be utilized to further increase the inclination of the bottom 120 for faster and more reliable emptying. Moreover, to further improve the emptying, the cylinder 140 can be used to shake the bottom 120. An inclinable bottom 120 in a hopper 20 is therefore especially advantageous in combination with an opening 190 for emptying the hopper 20 by gravity.

The invention is not limited to the embodiments shown above, but the person skilled in the art may modify them in a plurality of ways within the scope of the invention as defined by the claims.

## Claims

1. A component feeder (10) for dispensing components (30) during consecutive work cycles, the component feeder (10) comprising:
a lift (40) for elevating a selection of components (30) from a bulk storage during each work cycle,
a controller (80) for controlling a travel (90) of the lift (40), and
a pick surface (50) adjacent to the lift (40) for receiving the selection of components (30), wherein the lift (40) is configured to travel downwards while there are components (30) on the pick surface (50),
**characterized in that** the component feeder (10) indicates a reception level (110) where the lift (40) travelled low enough to receive one or more components (30), the controller (80) being configured to adjust the travel (90) from one work cycle to another in dependence of the reception level indication, and **in that** the controller (80) is configured to control the lift (40) to remain at the reception level (110) until all the components (30) on the pick surface are either picked or returned to the bulk storage by retracting the pick surface (50), after which the lift (40) travels back to its uppermost position bringing along a selection of components.

2. A component feeder (10) according to claim 1, wherein the component feeder (10) indicates a component level (100), and the controller (80) is configured to adjust the travel (90) in dependence of the component level (100) indication.

3. A component feeder (10) according to any of the preceding claims, wherein the component feeder (10) further comprises a hopper (20) with a hopper volume (130) for receiving the bulk storage of components (30), the hopper volume (130) being adjustable.

4. A component feeder (10) according to claim 3, wherein the hopper (20) comprises an inclinable bottom (120).

5. A component feeder (10) according to claim 4, wherein the hopper (20) comprises an opening (190) for emptying the hopper (20) by gravity.

6. A component feeder (10) according to any of claims 3 to 5, wherein the component feeder (10) is configured to adjust the hopper volume (130) from one work cycle to another.

7. A method for dispensing components (30) during consecutive work cycles, the method comprising the steps of:
- providing a lift (40) for elevating a selection of components (30) from a bulk storage during each work cycle;
- controlling a travel (90) of the lift (40);
- providing a pick surface (50) adjacent to the lift (40) for receiving the selection of components (30); and
- making the lift (40) travel downwards while there are components (30) on the pick surface (50);
**characterized in that** the method further comprises the steps of:
- indicating a reception level (110) where the lift (40)travelled low enough to receive one or more components (30);
- adjusting the travel (90) from one work cycle to another in dependence of the reception level indication;
- making the lift (40) remain at the reception level (110) until all the components (30) on the pick surface are either picked or returned to the bulk storage by retracting the pick surface (50), after which follows the step of:
- making the lift (40) travel back to its uppermost position bringing along a selection of components (30).

8. A method according to claim 7, wherein the method further comprises the steps of:
- indicating a component level (100); and
- adjusting the travel (90) in dependence of the component level (100) indication.

9. A method according to claim 7 or 8, wherein the method further comprises the steps of:
- providing a hopper (20) with a hopper volume (130) for receiving the bulk storage of components (30); and
- adjusting the hopper volume (130) from one work cycle to another.

10. A method according to claim 9, wherein the method further comprises the steps of:
- providing the hopper (20) with an inclinable bottom (120) and with an opening (190) for emptying the hopper (20) by gravity; and
- increasing the inclination of the bottom (120) during emptying of the hopper (20).

11. A method according to claim 10, wherein the method further comprises the step of:
- shaking the bottom (120) during emptying of the hopper (20).

## Patentansprüche

1. Komponentenzuführer (10) zum Ausgeben von Komponenten (30) während aufeinander folgender Arbeitszyklen, wobei der Komponentenzuführer (10) Folgendes umfasst:
eine Hebevorrichtung (40) zum Anheben einer Auswahl von Komponenten (30) aus einem Massenspeicher während jedes Arbeitszyklus,
eine Steuerung (80) zum Steuern eines Verfahrwegs (90) der Hebevorrichtung (40), und
eine Aufnahmeoberfläche (50) angrenzend an die Hebevorrichtung (40) zum Aufnehmen der Auswahl von Komponenten (30), wobei die Hebevorrichtung (40) dazu ausgelegt ist, sich nach unten zu bewegen, während es Komponenten (30) auf der Aufnahmeoberfläche (50) gibt, **dadurch gekennzeichnet, dass** der Komponentenzuführer (10) ein Aufnahmeniveau (110) anzeigt, wo sich die Hebevorrichtung (40) weit genug nach unten bewegt hat, um eine oder mehrere Komponenten (30) aufzunehmen, wobei die Steuerung (80) dazu ausgelegt ist, den Verfahrweg (90) von einem Arbeitszyklus zum nächsten in Abhängigkeit von der Aufnahmeniveauanzeige einzustellen,
und dadurch, dass die Steuerung (80) dazu ausgelegt ist, die Hebevorrichtung (40) zu steuern, um bei dem Aufnahmeniveau (110) zu bleiben, bis alle Komponenten (30) auf der Aufnahmeoberfläche entweder aufgenommen oder durch Zurückziehen der Aufnahmeoberfläche (50) zum Massenspeicher zurückgeführt sind, woraufhin sich die Hebevorrichtung (40) zurück in ihre oberste Position bewegt, eine Auswahl von Komponenten mit sich führend.

2. Komponentenzuführer (10) nach Anspruch 1, wobei der Komponentenzuführer (10) ein Komponentenniveau (100) anzeigt und die Steuerung (80) dazu ausgelegt ist, den Verfahrweg (90) in Abhängigkeit von der Anzeige des Komponentenniveaus (100) einzustellen.

3. Komponentenzuführer (10) nach einem der vorhergehenden Ansprüche, wobei der Komponentenzuführer (10) ferner einen Trichter (20) mit einem Trichtervolumen (130) zum Aufnehmen des Massenspeichers von Komponenten (30) umfasst, wobei das Trichtervolumen (130) einstellbar ist.

4. Komponentenzuführer (10) nach Anspruch 3, wobei der Trichter (20) einen neigbaren Boden (120) umfasst.

5. Komponentenzuführer (10) nach Anspruch 4, wobei der Trichter (20) eine Öffnung (190) zum Leeren des Trichters (20) durch Schwerkraft umfasst.

6. Komponentenzuführer (10) nach einem der Ansprüche 3 bis 5, wobei der Komponentenzuführer (10) dazu ausgelegt ist, das Trichtervolumen (130) von einem Arbeitszyklus zum anderen einzustellen.

7. Verfahren zum Ausgeben von Komponenten (30) während aufeinander folgender Arbeitszyklen, wobei das Verfahren die folgenden Schritte umfasst:
- Bereitstellen einer Hebevorrichtung (40) zum Anheben einer Auswahl von Komponenten (30) aus einem Massenspeicher während jedes Arbeitszyklus;
- Steuern eines Verfahrwegs (90) der Hebevorrichtung (40);
- Bereitstellen einer Aufnahmeoberfläche (50) angrenzend an die Hebevorrichtung (40) zum Aufnehmen der Auswahl von Komponenten (30); und
- Veranlassen, dass sich die Hebevorrichtung (40) nach unten bewegt, während es Komponenten (30) auf der Aufnahmeoberfläche (50) gibt;
**dadurch gekennzeichnet, dass** das Verfahren ferner die folgenden Schritte umfasst:
- Anzeigen eines Aufnahmeniveaus (110), wo sich die Hebevorrichtung (40) weit genug nach unten bewegt hat, um eine oder mehrere Komponenten (30) aufzunehmen;
- Einstellen des Verfahrwegs (90) von einem Arbeitszyklus zu einem anderen in Abhängigkeit von der Aufnahmeniveauanzeige;
- Veranlassen, dass die Hebevorrichtung (40) bei dem Aufnahmeniveau (110) bleibt, bis alle Komponenten (30) auf der Aufnahmeoberfläche entweder aufgenommen oder durch Zurückziehen der Aufnahmeoberfläche (50) zum Massenspeicher zurückgeführt sind, woraufhin der folgende Schritt folgt:
- Veranlassen, dass sich die Hebevorrichtung (40) zurück in ihre oberste Position bewegt, eine Auswahl von Komponenten (30) mit sich führend.

8. Verfahren nach Anspruch 7, wobei das Verfahren ferner die folgenden Schritte umfasst:
- Anzeigen eines Komponentenniveaus (100); und
- Einstellen des Verfahrwegs (90) in Abhängigkeit von der Anzeige des Komponentenniveaus (100).

9. Verfahren nach Anspruch 7 oder 8, wobei das Verfahren ferner die folgenden Schritte umfasst:
- Bereitstellen eines Trichters (20) mit einem Trichtervolumen (130) zum Aufnehmen des Massenspeichers von Komponenten (30); und
- Einstellen des Trichtervolumens (130) von einem Arbeitszyklus zu einem anderen.

10. Verfahren nach Anspruch 9, wobei das Verfahren ferner die folgenden Schritte umfasst:
- Bereitstellen des Trichters (20) mit einem neigbaren Boden (120) und mit einer Öffnung (190) zum Leeren des Trichters (20) durch Schwerkraft; und
- Erhöhen der Neigung des Bodens (120) während des Leerens des Trichters (20).

11. Verfahren nach Anspruch 10, wobei das Verfahren ferner den folgenden Schritt umfasst:
- Rütteln des Bodens (120) während des Leerens des Trichters (20).

## Revendications

1. Alimentateur (10) en composants destiné à distribuer des composants (30) pendant des cycles de travail consécutifs, l'alimentateur (10) en composants comportant :
un élévateur (40) servant à élever une sélection de composants (30) à partir d'un stockage en vrac pendant chaque cycle de travail, un moyen (80) de commande servant à commander une course (90) de l'élévateur (40), et une surface (50) de prélèvement adjacente à l'élévateur (40) servant à recevoir la sélection de composants (30), l'élévateur (40) étant configuré pour se déplacer vers le bas tandis que des composants (30) se trouvent sur la surface (50) de prélèvement, **caractérisé en ce que** l'alimentateur (10) en composants indique un niveau (110) de réception où l'élévateur (40) est parvenu assez bas pour recevoir un ou plusieurs composants (30), le moyen (80) de commande étant configuré pour régler la course (90) d'un cycle de travail à un autre en fonction de l'indication de niveau de réception, et **en ce que** le moyen (80) de commande est configuré pour commander l'élévateur (40) pour qu'il reste au niveau (110) de réception jusqu'à ce que tous les composants (30) sur la surface de prélèvement soient soit prélevés, soit renvoyés au stockage en vrac en rétractant la surface (50) de prélèvement, après quoi l'élévateur (40) revient à sa position haute extrême, amenant avec lui une sélection de composants.

2. Alimentateur (10) en composants selon la revendication 1, l'alimentateur (10) en composants indiquant un niveau (100) de composants, et le moyen (80) de commande étant configuré pour régler la course (90) en fonction de l'indication de niveau (100) de composants.

3. Alimentateur (10) en composants selon l'une quelconque des revendications précédentes, l'alimentateur (10) en composants comportant en outre une trémie (20) dotée d'un volume (130) de trémie servant à recevoir le stockage en vrac de composants (30), le volume (130) de trémie étant réglable.

4. Alimentateur (10) en composants selon la revendication 3, la trémie (20) comportant un fond inclinable (120).

5. Alimentateur (10) en composants selon la revendication 4, la trémie (20) comportant une ouverture (190) destinée à vider la trémie (20) par gravité.

6. Alimentateur (10) en composants selon l'une quelconque des revendications 3 à 5, l'alimentateur (10) en composants étant configuré pour régler le volume (130) de trémie d'un cycle de travail à un autre.

7. Procédé de distribution de composants (30) pendant des cycles de travail consécutifs, le procédé comportant les étapes consistant à :
- mettre en place un élévateur (40) servant à élever une sélection de composants (30) à partir d'un stockage en vrac pendant chaque cycle de travail ;
- commander une course (90) de l'élévateur (40) ;
- mettre en place une surface (50) de prélèvement adjacente à l'élévateur (40) pour recevoir la sélection de composants (30) ; et
- faire se déplacer l'élévateur (40) vers le bas tandis que des composants (30) se trouvent sur la surface (50) de prélèvement ;
**caractérisé en ce que** le procédé comporte en outre les étapes consistant à :
- indiquer un niveau (110) de réception où l'élévateur (40) est parvenu assez bas pour recevoir un ou plusieurs composants (30) ;
- régler la course (90) d'un cycle de travail à un autre en fonction de l'indication de niveau de réception ;
- faire rester l'élévateur (40) au niveau (110) de réception jusqu'à ce que tous les composants (30) sur la surface de prélèvement soient soit prélevés, soit renvoyés au stockage en vrac en rétractant la surface (50) de prélèvement, ce qui est suivi de l'étape consistant à :
- faire revenir l'élévateur (40) à sa position haute extrême, amenant avec lui une sélection de composants (30) .

8. Procédé selon la revendication 7, le procédé comportant en outre les étapes consistant à :
- indiquer un niveau (100) de composants ; et
- régler la course (90) en fonction de l'indication de niveau (100) de composants.

9. Procédé selon la revendication 7 ou 8, le procédé comportant en outre les étapes consistant à :
- mettre en place une trémie (20) dotée d'un volume (130) de trémie servant à recevoir le stockage en vrac de composants (30) ; et
- régler le volume (130) de trémie d'un cycle de travail à un autre.

10. Procédé selon la revendication 9, le procédé comportant en outre les étapes consistant à :
- munir la trémie (20) d'un fond inclinable (120) et d'une ouverture (190) destinée à vider la trémie (20) par gravité ; et
- augmenter l'inclinaison du fond (120) pendant la vidange de la trémie (20).

11. Procédé selon la revendication 10, le procédé comportant en outre l'étape consistant à :
- secouer le fond (120) pendant la vidange de la trémie (20) .
